# EUROPÄISCHE PATENTSCHRIFT

(11) **EP 1 289 350 B1**
(45) Veröffentlichungstag und Bekanntmachung des Hinweises auf die Patenterteilung: **17.03.2004**
(21) Anmeldenummer: 02015874.7
(22) Anmeldetag: 16.07.2002
(51) Int. Cl.: H05B 41/295, H05B 41/24, H05B 37/02

(54) **Betriebsschaltung für Entladungslampe mit vorheizbaren Elektroden**
Working circuit for discharge lamp with electrode heater
Circuit de commande pour lampe à décharge avec électrodes préchauffées

(30) Priorität: 27.08.2001 DE 10140723
(43) Veröffentlichungstag der Anmeldung: 05.03.2003
(73) Patentinhaber: Patent-Treuhand-Gesellschaft für elektrische Glühlampen mbH, 81543 München (DE)
(72) Erfinder: Neidlinger, Thomas, 89134 Blaustein (DE)

(56) Entgegenhaltungen:
- US-A- 6 051 936
- PATENT ABSTRACTS OF JAPAN vol. 1995, no. 10, 30. November 1995 (1995-11-30) & JP 07 192881 A (TOSHIBA LIGHTING & TECHNOL CORP), 28. Juli 1995 (1995-07-28)
- PATENT ABSTRACTS OF JAPAN vol. 018, no. 332 (E-1567), 23. Juni 1994 (1994-06-23) & JP 06 078554 A (MATSUSHITA ELECTRIC WORKS LTD), 18. März 1994 (1994-03-18)

## Beschreibung

### Technisches Gebiet

Die Erfindung bezieht sich auf eine Betriebsschaltung für eine Entladungslampe mit vorheizbaren Elektroden.

### Stand der Technik

Es ist allgemein bekannt, dass bei Niederdruckentladungslampen vor dem Zünden der Entladung die Elektroden, im allgemeinen Glühwendeln, vorgeheizt werden sollen. Ein ordnungsgemäßes Vorheizen erleichtert nicht nur den Startvorgang, sondern ist insbesondere für die Lebensdauer der Elektroden wesentlich.

Konventionellerweise verwendet man hierzu eine der Entladungsstrecke durch die Entladungslampe parallel geschaltete und zu den beiden Elektroden üblicher Entladungslampen in Reihe liegende Schaltung, die eine Parallelschaltung aus einem Kondensator und einem Kaltleiter (PTC-Element) enthält. Bei einem Kaltstart ist der Kaltleiter leitend, so dass der Kondensator überbrückt ist. Die Betriebsschaltung beaufschlagt die Entladungslampe mit einer Betriebsspannung, die jedoch durch den Kaltleiter zu einem relativ großen Strom führt, der die von diesem Strom durchflossenen Elektroden bzw. Glühwendeln aufheizt. Nach einer bestimmten Vorheizzeit wird der Kaltleiter hochohmig, so dass nunmehr nur der Blindwiderstand des Kondensators wirksam ist. Dadurch steigt die Spannung zwischen den Elektroden an, so dass die Entladung gezündet werden kann.

Diese Lösung ist mit verschiedenen Nachteilen verbunden. Zum einen führt der Kaltleiter im Dauerbetrieb zu einer die Effizienz etwas beeinträchtigenden beständigen Leistungsaufnahme. Außerdem können daraus thermische Probleme für Vorschaltgeräte folgen. Zum zweiten benötigt der Kaltleiter zum Abkühlen nach dem Ausschalten der Entladungslampe eine vergleichsweise lange Zeit, z.B. zwei Minuten. Wenn die Entladungslampe also nach (eventuell versehentlichem) Ausschalten kurze Zeit später wieder eingeschaltet wird, so erfolgt dieser Neustart ohne ordnungsgemäße Vorheizung der Elektroden. Schließlich muß der verwendete Kondensator für die an der Entladungslampe bei der Zündung anliegenden Spannungen ausgelegt sein und ist daher ein vergleichsweise teures Bauteil. Auch der Kaltleiter ist ein die Kosten der Betriebsschaltung insgesamt spürbar erhöhendes Bauteil.

Man ist daher bestrebt, alternative Möglichkeiten zum Vorheizen der Elektroden in den Entladungslampen zu finden.

Eine solche Möglichkeit schildert die DE 196 13 149. Dort wird für eine Betriebsschaltung, die einen Halbbrückenoszillator mit zwei Bipolartransistoren als Schalttransistoren aufweist, vorgeschlagen, die Emitterwiderstände dieser Bipolartransistoren nach Ablauf der Vorheizzeit zu verändern, womit die Gegenkopplung in dem Halbbrückenoszillator beeinflusst werden kann. Technisch notwendig für die dort dargestellte Schaltung ist die Verwendung eines Ringkerntransformators, der im Normalbetrieb abhängig von den Emitterwiderständen zu unterschiedlichen Zeitpunkten sättigt. Aus der Veränderung der Gegenkopplung folgt somit eine Beeinflussung der Betriebsfrequenz der Betriebsschaltung. Dabei ist die Betriebsschaltung so ausgelegt, dass sie während des Vorheizens gegenüber einer durch einen Lampenkreis gegebenen Resonanzfrequenz zu hoch liegt und erst nach Ablauf der Vorheizzeit in der beschriebenen Weise auf einen Wert gebracht wird, der zum Zünden der Entladungslampe führt.

### Darstellung der Erfindung

Von diesem Stand der Technik geht der Oberbegriff des Anspruchs 1 aus. Der Erfindung liegt das technische Problem zugrunde, eine neue Betriebsschaltung für Entladungslampen mit vorheizbaren Elektroden anzugeben, die eine funktionssichere, flexible und kostengünstige Lösung zum Vorheizen der Elektroden gewährleistet.

Erfindungsgemäß ist hierzu eine Betriebsschaltung für eine Entladungslampe mit vorheizbaren Elektroden vorgesehen, die eine Oszillatorschaltung mit zumindest einem Schalttransistor zur Erzeugung einer Ausgangsleistung mit einer HF-Frequenz für die an die Oszillatorschaltung anzuschließende Entladungslampe durch einen der HF-Frequenz entsprechenden Schaltbetrieb aufweist, wobei die Betriebsschaltung so ausgelegt ist, dass nach einem Start der Betriebsschaltung die HF-Frequenz der Oszillatorschaltung so verändert wird, dass die Entladungslampe zunächst nicht zündet, jedoch ein Vorheizstrom zum Vorheizen der Elektroden durch die Elektroden fließt, und die HF-Frequenz nach einer Vorheizzeit auf eine Betriebsfrequenz in der Nähe einer Resonanzfrequenz der Oszillatorschaltung zurückgeführt wird, um die Entladungslampe zu zünden, dadurch gekennzeichnet, dass die HF-Frequenz der Oszillatorschaltung durch zumindest einen eigenen Schwingkreis bestimmt wird, der an einer Steuerelektrode des Schalttransistors angeschlossen ist, um die Steuerelektrode mit Steuersignalen mit der durch den Schwingkreis bestimmten HF-Frequenz zu beaufschlagen, wobei die Veränderung der HF-Frequenz zum Vorheizen durch eine Verstimmung der Eigenfrequenz des Schwingkreises gegenüber der Resonanzfrequenz der Oszillatorschaltung erfolgt.

Bevorzugte Ausgestaltungen der Erfindung sind in den abhängigen Ansprüchen angegeben.

Bei der Erfindung wird somit zur Festlegung der Betriebsfrequenz ein eigenständiger Schwingkreis verwendet. Dieser Schwingkreis liegt an der Steuerelektrode des zumindest einen Schalttransistors der Oszillatorschaltung der Betriebsschaltung und prägt somit die Schwingkreisfrequenz dem Schaltbetrieb des Schalttransistors und damit der gesamten Betriebsschaltung auf. Wenn mehr als ein Schalttransistor vorgesehen ist, können übrigens auch zwei oder mehrere Schwingkreise vorgesehen sein.

Dabei darf die Aussage, dass der oder die Schwingkreise die Betriebsfrequenz festlegen, nicht so verstanden werden, als könnte damit jede beliebige Schwingfrequenz eines Schwingkreises als Betriebsfrequenz gewählt werden. Da die Schalttransistoren zu der Oszillatorschaltung gehören und diese eine bestimmte Resonanzfrequenz hat, sind als Betriebsfrequenz insgesamt nur Frequenzen in einer gewissen Umgebung um diese Resonanzfrequenz möglich. Wenn also die Frequenz des Schwingkreises gegenüber der Resonanzfrequenz der Oszillatorschaltung sehr stark verstimmt sein sollte, so kommt kein Betrieb zustande. Innerhalb einer bestimmten Umgebung um die Resonanzfrequenz der Oszillatorschaltung wird der Betrieb jedoch durch die Frequenz des Schwingkreises bestimmt. Der Schwingkreis und die Oszillatorschaltung sind dabei zumindest durch die Ansteuerung der Schalttransistoren gekoppelt. Vorzugsweise ist jedoch auch eine Energierückkopplung aus der Oszillatorschaltung in den Schwingkreis zur Energieeinkopplung in den Schwingkreis vorgesehen.

Der erfindungsgemäße Schwingkreis ist gegenüber der Oszillatorschaltung insoweit eigenständig, als er eine eigenständige Frequenz festlegt und eigenständig in der Frequenz abgestimmt, also insbesondere auch verändert, d.h. verstimmt werden kann. Die Erfindung sieht nun vor, statt der in dem zitierten Stand der Technik vorgeschlagenen Beeinflussung der Beschaltung der Schalttransistoren und damit Beeinflussung der Gegenkopplung der Oszillatorschaltung direkt die frequenzbestimmenden Größen in dem erfindungsgemäßen Schwingkreis zu verändern. Der Schwingkreis soll also gezielt verstimmt werden, um den Vorheizbetrieb zu ermöglichen. Er ist also während der Vorheizzeit gegenüber der oder dejenigen Betriebsfrequenzen, die ein Zünden der Entladungslampe zur Folge haben, frequenzverschoben, und wird erst nach Ablauf der Vorheizzeit so verändert, dass die Entladungslampe zünden kann.

Damit lassen sich besonders einfache und effiziente Schaltungen realisieren; insbesondere erübrigt sich die Verwendung des Kaltleiters und des hierzu konventionellerweise parallel geschalteten Kondensators.

Außerdem ist das erfindungsgemäße Konzept relativ universell einsetzbar, weil die Auswahl von Transistoren als Schaltelementen in Oszillatorschaltungen in verschiedener Weise, nicht nur in Form von Bipolartransistoren, erfolgen kann. Andere wesentliche Voraussetzungen als die Verwendung zumindest eines Schalttransistors in der Oszillatorschaltung bestehen im Grunde nicht. Auch die Verwendung eines Ringkerntransformators ist nicht notwendig. Vielmehr ist zur Rückkopplung in den Schwingkreis ein Transformator bevorzugt, der im Normalbetrieb nicht sättigt.

Bevorzugt ist eine Halbbrückenanordnung als Oszillatorschaltung, die zwei Schalttransistoren enthält. Hierbei kann pro Schalttransistor eine eigene Schwingkreisschaltung vorgesehen sein. Es lassen sich jedoch auch Lösungen finden, die mit einem einzigen Schwingkreis auskommen. Insbesondere könnte das Signal eines Schwingkreises für einen der beiden Schalttransistoren invertiert werden, während es an den anderen unverändert angelegt wird. Bevorzugt ist jedoch die Verwendung komplementärer Schalttransistoren in der Halbbrücke, also eines Paares aus einem npn- und einem pnp-Schalttransistor oder eines Paares aus einem n-Kanal- und einem p-Kanal-FET. Die erfindungsgemäß bevorzugten Schaltelemente sind spannungsgesteuert, also FETs oder IGBTs, insbesondere MOS-FETs.

Wenn eine Brückenschaltung (im allgemeinen Sinn, als z.B. auch eine Vollbrücke) vorgesehen ist, so ist zumindest ein Schwingkreis vorzugsweise zwischen der Steuerelektrode des jeweiligen Schalttransistors und dem Brückenmittelpunkt vorgesehen, wie auch das Ausführungsbeispiel zeigt.

Bei dem Schwingkreis handelt es sich vorzugsweise um einen Schwingkreis, in dem die Frequenz durch eine oder mehrere Induktivitäten und eine oder mehrere Kapazitäten definiert ist, also einen LC-Schwingkreis. Wie das Ausführungsbeispiel verdeutlicht, kann die Kapazität dabei auch eine Transistoreingangskapazität sein. Es ist nicht notwendigerweise eine eigener Kondensator erforderlich.

Das Verstimmen des Schwingkreises kann in verschiedener Form erfolgen, beispielsweise durch Verändern der effektiven frequenzbestimmenden Induktivität oder Kapazität. Bevorzugt ist jedoch das Zu- oder Wegschalten einer Kapazität. Hierzu ist also in einer mit der Kapazität verbundenen Strecke in dem Schwingkreis ein Schalter vorzusehen, insbesondere ein Transistor.

Vorzugsweise wird dabei die Frequenz während des Vorheizens über der Dauerbetriebsfrequenz liegen, der Schwingkreis also noch zu höheren Frequenzen hin verstimmt werden. Dazu kann also die erwähnte Kapazität, wenn sie zu anderen Kapazitäten parallel wirkt, während des Vorheizens weggeschaltet sein, die entsprechende Leitungsstrecke also unterbrochen sein. Nach Ende der Vorheizzeit wird die Strecke dann eingeschaltet und somit die Kapazität mit frequenzbestimmend. Bei einer Reihenschaltung zueinander zu anderen Kapazitäten gilt das Umgekehrte. Beispielsweise kann während des Vorheizens eine kleine Transistoreingangskapaziät Verwendung finden, während die nach dem Ende des Vorheizens zuzuschaltende Kapazität in Form eines eigenen Kondensators vorliegt. Es wird auf das Ausführungsbeispiel verwiesen.

Die Vorheizzeit kann in verschiedener Form definiert werden. Eine bevorzugte Lösung besteht in einer Schaltung, die eine Vorheizzeitkapazität während der Vorheizzeit auflädt und nach Erreichen einer bestimmten Spannung an der Kapazität zu einem Umschalten der Frequenz im Schwingkreis führt.

Grundsätzlich bietet die Erfindung den Vorteil eines erheblich kürzeren Zeitabstandes zwischen einem Ausschalten und einem wieder mit ordnungsgemäßem Vorheizen erfolgenden Einschalten. Bei der hier vorgeschlagenen Lösung zur Definition der Vorheizzeit kann dieser Zeitabstand bei Bedarf weiter dadurch verkürzt werden, dass der Vorheizkapazität ein Entladewiderstand parallel geschaltet ist. Im Grunde kann aber schon die bauelementbedingte Eigenentladung des Kondensators eine ausreichend schnelle Entladung nach dem Ausschalten bewirken.

Der Spannungsschwellenwert bei dem Laden der Vorheizzeitkapazität kann beispielsweise durch eine Zenerdiode definiert werden. Das Ausführungsbeispiel zeigt, wie nach Überwinden der Durchlassspannung der Zenerdiode ein Transistor leitend geschaltet wird, der in der an dem Kondensator für die Frequenzverstimmung (zu der Betriebsfrequenz hin) liegenden Strecke angeordnet ist. Die Zenerdiode dient dann dazu, die durch den Transistor vorgegebene Schwellenwertspannung zu erhöhen.

Außerdem kann parallel zu der Steuerstrecke des Transistors ein weiterer Widerstand vorgesehen sein, der die Schaltung weniger empfindlich im Hinblick auf Schwankungen des Transistors macht, also etwa parallel zu der im Ausführungsbeispiel hier vorgesehenen Emitter-Basis-Strecke des Bipolartransistors der Vorheizschaltung.

Wenn die bereits erwähnten Schalttransistoreingangskapazitäten für eine ausreichende Oszillation der Oszillatorschaltung während des Vorheizens nicht ausreichen, so kann der beschriebenen Transistorstrecke, die während des Vorheizens unterbrochen wird und danach leitend sein soll, eine verhältnismäßig kleine Kapazität parallel geschaltet sein, um diese Vorheizoszillationen auf ein ausreichendes Niveau zu bringen und damit einen ausreichenden Vorheizstrom zu ermöglichen.

Entsprechende Lösungen sind natürlich auch möglich, wenn anstelle der Kapazität zur Frequenzverstimmung im Schwingkreis eine Induktivität verwendet wird.

Die Erfindung richtet sich grundsätzlich auf Betriebsschaltungen für Entladungslampen, insbesondere auf Betriebsschaltungen für Niederdruckentladungslampen. Damit findet sie bevorzugte Anwendung in Vorschaltgeräten, die separat oder integriert ausgeführt sein können. Beansprucht werden somit auch erfindungsgemäß ausgestaltete Vorschaltgeräte für Stableuchtstofflampen, die in der Regel separat ausgeführt sind. Andererseits richtet sich die Erfindung auch auf Vorschaltgeräte für Kompaktleuchtstofflampen, und zwar sowohl als separate Vorschaltgeräte wie auch als integrierte. Im letzteren Fall wird also die komplette Kompaktleuchtstofflampe beansprucht.

### Beschreibung der Zeichnungen

Im folgenden wird ein erfindungsgemäßes Ausführungsbeispiel näher dargestellt, das zur Veranschaulichung der verschiedenen erfindungsgemäßen Merkmale dient. Die dabei offenbarten Einzelmerkmale können auch in anderen Kombinationen als dargestellt erfindungswesentlich sein. Vorsorglich wird darauf hingewiesen, dass die Erfindung nicht nur im Rahmen von Produktansprüchen, sondern auch im Rahmen von Verfahrensansprüchen beansprucht werden könnte, die vorstehende und die folgende Offenbarung also auch im Hinblick auf Verfahrensmerkmale zu lesen und zu verstehen ist.

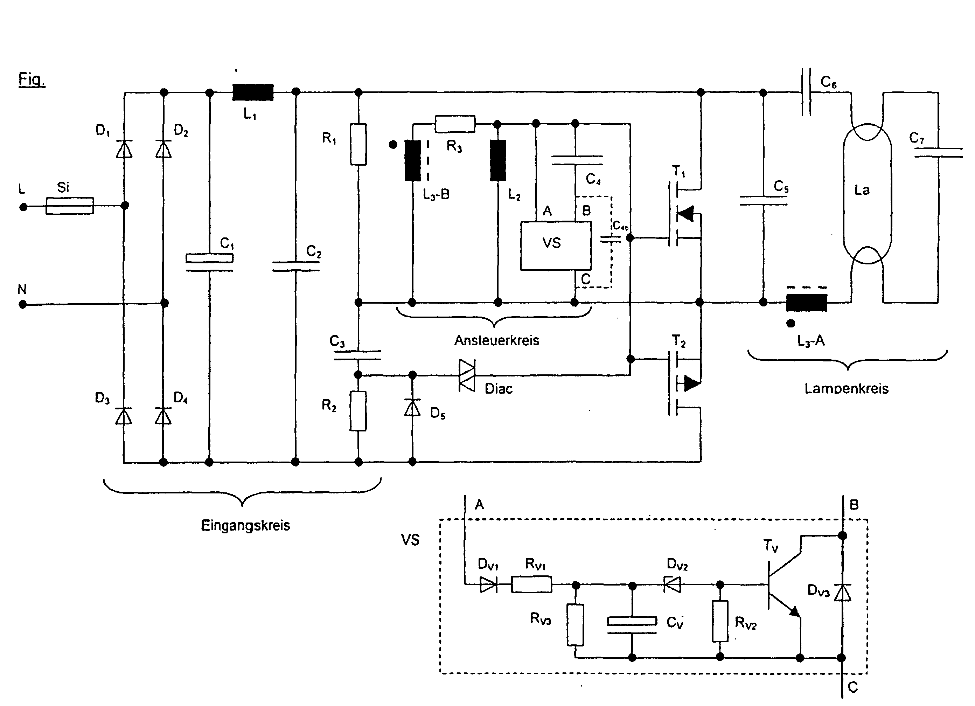

Die Figur zeigt ein Schaltungsdiagramm eines Ausführungsbeispiels für eine erfindungsgemäße Betriebsschaltung.

Darin bezeichnet La eine Niederdruckentladungslampe, wobei schematisch dargestellt ist, dass zwei Glühwendeln in den in der Figur als Lampenkreis bezeichneten Teil der Betriebsschaltung geschaltet sind. Die Glühwendeln sind über einen Kondensator C₇ verbunden, der als Resonanzkondensator dient. Bei konventionellen Schaltungen zum Vorheizen der Elektroden liegt seriell zu dem Resonanzkondensator C₇ eine Parallelschaltung aus einem weiteren Kondensator und einem Kaltleiter, um in der bereits beschriebenen Art und Weise für das Vorheizen der Elektroden zu sorgen. Dieser weitere Kondensator und der Kaltleiter sind bei der Erfindung nicht mehr notwendig.

Die Versorgung der Entladungslampe La erfolgt folgendermaßen: An dem mit L und N bezeichneten Netzeingang (Haushaltsnetzspannung) ist eine Sicherung Si angeschlossen. Es folgt ein aus den Dioden D₁ bis D₄ bestehender Gleichrichter, dessen Ausgang einen Glättungskondensator C₁ aufweist. L₁ bezeichnet eine Filterdrossel und C₂ einen Kondensator; beide Bauteile bilden gemeinsam ein Funkentstörungsglied.

Es folgt die eigentliche Oszillatorschaltung mit zwei Schalttransistoren T₁ und T₂, nämlich MOS-FET-Transistoren. Die Bauteile R₁, R₂, C₃, D₅ und der Diac bilden eine Anlaufschaltung, die an sich bekannt ist. Der Kondensator C₃ wird bei dieser Anlaufschaltung nach Anlegen der Netzspannung an die Anschlüsse L und N solange aufgeladen, bis an dem Diac eine Durchbruchspannung anliegt und diese einen ersten Ansteuerpuls für die Schalttransistoren T₁ und T₂ bereitstellt. Im weiteren Betrieb wird durch die Beschaltung des Kondensators C₃ verhindert, dass dieser erneut einen Ansteuerpuls liefert. Die Funktionsweise der Anlaufschaltung ist für die vorliegende Erfindung ohne Belang.

Die Entladungslampe La ist über eine Resonanzinduktivität L₃-A mit dem Mittenabgriff zwischen den beiden eine Halbbrücke bildenden Schalttransistoren T₁ und T₂ verbunden und an der anderen Elektrode über einen Auskoppelkondensator C₆ mit dem in der Figur oberen Versorgungsast, also einem der beiden Außenanschlüsse der Halbbrücke, verbunden.

Die Resonanzinduktivität L₃-A, der Auskoppelkondensator C₆ und der Resonanzkondensator C₇ bilden einen Serienresonanzkreis. Der Kondensator C₅ dient lediglich zur Entlastung der Schalttransistoren T₁ und T₂ und trägt bei zur Funkentstörung.

Die Ansteuerung der Schalttransistoren geschieht über den in der Figur so bezeichneten Ansteuerkreis, dessen Bestandteil VS im unteren Teil der Figur eigens dargestellt ist und für die Vorheizung der Elektroden der Entladungslampe La verantwortlich ist. Im Dauerbetrieb ist die Emitter-Kollektor-Strecke des Transistors Tᵥ in der Vorheizschaltung VS leitend, so dass die beiden Punkte B und C verbunden sind. In diesem Zustand bildet der Ansteuerkreis einen eigenständigen Schwingkreis mit der Induktivität L₂ und der Kapazität C₄. Wenn andererseits die Emitter-Kollektor-Strecke des Transistors Tᵥ offen ist, besteht der Schwingkreis in dem Ansteuerkreis nur aus der Induktivität L₂ zusammen mit den Transistoreingangskapazitäten der Schalttransistoren T₁ und T₂. Wenn die Transistoreingangskapazitäten für die im folgenden noch erläuterte Funktion des Schwingkreises in diesem Zustand nicht ausreichen, so kann der in der Figur gestrichelt eingezeichnete Hilfskondensator C_{4b} hinzugefügt werden, der in Serienschaltung mit dem Kondensator C₄ eine passende (vergleichsweise kleine) Gesamtkapazität bildet.

Der Ansteuerkreis ist bei diesem Ausführungsbeispiel nur einfach vorgesehen und an die Steuerelektroden beider Schalttransistoren T₁ und T₂ angeschlossen. Dies ist möglich, weil es sich um komplementäre Schalttransistoren handelt, wie die Schaltsymbole in der Figur verdeutlichen.

Weiterhin erkennt man, dass über den Widerstand R₃ eine Wicklung L₃-B an den Schwingkreis in dem Ansteuerkreis angeschlossen ist, wobei diese Wicklung L₃-B mit der bereits erwähnten Resonanzinduktivität L₃-A im Lampenkreis gekoppelt ist. Es kann sich hier um einen (im Normalbetrieb nicht sättigenden) Transformator handeln, jedoch können die beiden Induktivitäten auch hinreichend nah zueinander montiert sein, so dass eine magnetische Kopplung besteht. Die Kopplung dient zur Synchronisation der Schwingungen des Ansteuerkreises und der übrigen Oszillatorschaltung und zur Energieeinspeisung in den Schwingkreis. Das Schaltdiagramm zeigt, dass der Schwingkreis in dem Ansteuerkreis nämlich gegenüber dem Lampenkreis mit den Emitter-Kollektor-Strecken der Schalttransistoren T₁ und T₂ eine eigenständige Frequenz definiert. Durch die Kopplung über die Induktivitäten L₃-A und L₃-B und die Steuerelektroden der Schalttransistoren T₁ und T₂ entsteht ein System aus zwei gekoppelten Oszillatoren. Dies wird dazu ausgenutzt, die Entladungslampe La nach dem Start (Startpuls des Diac) zunächst vorzuheizen, indem die Emitter-Kollektor-Strecke des Transistors Tᵥ in der Vorheizschaltung VS offen bleibt und somit der Schwingkreis aus der Induktivität L₂ und den Eingangskapazitäten der Schalttransistoren T₁ und T₂ bzw. der Gesamtkapazität C₄ in Serie mit C_{4b} mit einer gegenüber der Eigenfrequenz des Serienresonanzkreises im Lampenkreis etwas zu hohen Frequenz schwingt. Die durch den Schwingkreis vorgegebene Frequenz ist dabei jedoch gegenüber der Eigenfrequenz des Serienresonanzkreises nur soweit nach oben verstimmt, dass die Oszillatorschaltung in einem gewissen Maß mitschwingt, also auch eine Energierückkopplung über den Transformator in den Schwingkreis erfolgt. Durch die Frequenzverstimmung kommt es in dem Lampenkreis nicht zu einer ausreichenden Spannungsüberhöhung zwischen den Elektroden, so dass die Entladungslampe La nicht durchzündet. Stattdessen fließt infolge der erzwungenen Schwingung in der Oszillatorschaltung ein Vorheizstrom durch die Elektroden.

Wenn übrigens die Transistoreingangskapazitäten der Schalttransistoren T₁ und T₂ zusammen mit der Induktivität L₂ eine bereits zu zündfrequenznahe Eigenfrequenz des Schwingkreises in dem Ansteuerkreis definieren sollten, könnte entweder die Induktivität L₂ verändert oder eine zusätzliche Bedämpfung vorgenommen werden.

Wenn nun eine Vorheizzeit abgelaufen ist, auf deren technische Realisierung noch eingegangen wird, wird die Emitter-Kollektor-Strecke des Transistors T_{V} leitend, so dass die Frequenz des Schwingkreises in dem Ansteuerkreis durch die Induktivität L₂ zusammen mit der Kapazität C₄ bestimmt wird. Diese Frequenz liegt in der Nähe der Resonanzfrequenz des übrigen Oszillators (also des Serienresonanzkreises des Lampenkreises zusammen mit den Schaltstrecken der Schalttransistoren T₁ und T₂).

Infolge dessen entsteht zwischen den bereits vorgeheizten Elektroden infolge der Resonanzüberhöhung eine für die Zündung der Entladungslampe La ausreichende Spannung, so dass die Entladungslampe La durchzündet. Sobald die Zündung erfolgt ist, bildet die Entladungslampe La einen parallelen Strompfad zu dem Resonanzkondensator C₇, so dass nur noch relativ geringe Ströme durch die Elektroden zu dem Kondensator C₇ fließen.

Der Schaltbetrieb des Transistors Tᵥ, der die Kapazität C₄ zunächst wegschaltet und dann zuschaltet, wird in folgender Weise gesteuert: Ein in der detaillierten Darstellung der Vorheizschaltung VS eingezeichneter Kondensator Cᵥ wird von einem Punkt A aus über eine Diode D_{V1} und einen Widerstand R_{V1} aufgeladen, bis die Summe aus der notwendigen Basis-Emitter-Spannung und der Durchbruchspannung einer Zenerdiode D_{V2} erreicht ist. Über diese Zenerdiode D_{V2} ist eine Seite des Kondensators Cv mit der Steuerelektrode (der Basis des Bipolartransistors Tv) verbunden, während die andere Seite des Kondensators Cv mit einem anderen Anschluss (dem Emitter) des Transistors Tᵥ verbunden ist. Dadurch wird die Kondensatorspannung an die Emitter-Basis-Strecke angelegt, so dass die Emitter-Kollektor-Strecke des Transistors Tᵥ leitend wird. Solange allerdings die Durchbruchspannung der Zenerdiode D_{V2} nicht erreicht ist, sind die Basis und der Emitter des Transistors Tv über den Widerstand R_{V2} kurzgeschlossen, so dass die Emitter-Kollektor-Strecke offen bleibt. Bei der Diode Dv3 handelt es sich im übrigen um eine für die Beschaltung von Bipolartransistoren übliche Freilaufdiode.

Dem Kondensator Cᵥ liegt im übrigen ein Entladewiderstand R_{V3} parallel, der den Kondensator nach einem Ausschalten der gesamten Betriebsschaltung in einer für die Nutzung der Entladungslampe La sehr kleinen Zeitspanne wieder entlädt und so ein kurzfristiges Wiedereinschalten der Entladungslampe La mit ordnungsgemäßem Vorheizen ermöglicht. Andererseits ist die durch diesen Widerstand R_{V3} gegebene Entladung des Transistors T_{V} langsam genug, um die Entladung im Vergleich zu den Ladevorgängen durch die Diode D_{V1} und den Widerstand R_{V1} hinreichend schwach auszulegen.

Der Widerstand R_{V1} bremst die Aufladung des Kondensators Cᵥ und dient damit zusammen mit dessen Kapazität und der Durchbruchspannung der Diode D_{V2} zur Definition der Vorheizzeit.

Der Widerstand R_{V2} dient im übrigen zur Vermeidung zu großer Abhängigkeiten von Streuungen verschiedener individueller Transistoren Tᵥ.

Insgesamt könnte es sich bei der Betriebsschaltung aus der Figur zusammen mit der Entladungslampe La um eine integrierte Lösung, also beispielsweise eine Kompaktleuchtstofflampe mit im Sockel integriertem Vorschaltgerät handeln. Die Schaltung ist jedoch genauso gut auf separate Lösungen anwendbar, bei denen eine Entladungslampe La mit ihren Elektroden an entsprechende Anschlüsse der Betriebsschaltung angeschlossen werden kann. Außerdem könnte statt der dargestellten Versorgung über die an die Anschlüsse L N anzulegende Netzspannung natürlich auch eine andere Versorgung, etwa aus einer Batterie erfolgen, wobei dann der Gleichrichter entfallen könnte.

## Patentansprüche

1. Betriebsschaltung für eine Entladungslampe (La) mit vorheizbaren Elektroden,
welche Betriebsschaltung eine Oszillatorschaltung (T₁, T₂, C₅ - C₇, L₃-A, La) mit zumindest einem Schalttransistor zur Erzeugung einer Ausgangsleistung mit einer HF-Frequenz für die an die Oszillatorschaltung (T₁, T₂, C₅ - C₇, L₃-A, La) anzuschließende Entladungslampe (La)durch einen der HF-Frequenz entsprechenden Schaltbetrieb aufweist,
wobei die Betriebsschaltung so ausgelegt ist, dass nach einem Start der Betriebsschaltung die HF-Frequenz der Oszillatorschaltung (T₁, T₂, C₅ - C₇, L₃-A, La) so verändert wird, dass die Entladungslampe (La) zunächst nicht zündet, jedoch ein Vorheizstrom zum Vorheizen der Elektroden durch die Elektroden fließt,
und die HF-Frequenz nach einer Vorheizzeit auf eine Betriebsfrequenz in der Nähe einer Resonanzfrequenz der Oszillatorschaltung (T₁, T₂, C₅ - C₇, L₃-A, La) zurückgeführt wird, um die Entladungslampe zu zünden,
**dadurch gekennzeichnet,**
**dass** die HF-Frequenz der Oszillatorschaltung (T₁, T₂, C₅ - C₇, L₃-A, La) durch zumindest einen eigenen Schwingkreis (L₂, C₄, C_{4b}, VS) bestimmt wird, der an einer Steuerelektrode des Schalttransistors (T, T₂) angeschlossen ist, um die Steuerelektrode mit Steuersignalen mit der durch den Schwingkreis (L₂, C₄, C_{4b}, VS) bestimmten HF-Frequenz zu beaufschlagen,
wobei die Veränderung der HF-Frequenz zum Vorheizen durch eine Verstimmung der Eigenfrequenz des Schwingkreises (L₂, C₄, C_{4b}, VS) gegenüber der Resonanzfrequenz der Oszillatorschaltung (T₁, T₂, C₅-C₇, L₃-A, La) erfolgt.

2. Betriebsschaltung nach Anspruch 1, bei der die Oszillatorschaltung (T₁, T₂, C₅ - C₇, L₃-A, La) eine Halbbrückenschaltung mit zwei Schalttransistoren (T₁, T₂) ist.

3. Betriebsschaltung nach Anspruch 2, bei der die Halbbrückenschaltung komplementäre Schalttransistoren (T₁, T₂) aufweist.

4. Betriebsschaltung nach einem der vorstehenden Ansprüche, bei der die Oszillatorschaltung (T₁, T₂, C₅ - C₇, L₃-A, La) MOS-FETs als Schalttransistoren (T₁, T₂) aufweist.

5. Betriebsschaltung nach einem der vorstehenden Ansprüche, bei der die Oszillatorschaltung (T₁, T₂, C₅ - C₇, L₃-A, La) eine Brückenschaltung ist und der Schwingkreis (L₂, C₄, C_{4b}, VS) zwischen der Steuerelektrode und einem Brückenmittelpunkt liegt.

6. Betriebsschaltung nach einem der vorstehenden Ansprüche, bei der der Schwingkreis ein LC-Schwingkreis ist.

7. Betriebsschaltung nach einem der vorstehenden Ansprüchge, bei der die Verstimmung der Eigenfrequenz des Schwingkreises durch ein Schalten einer mit einer Kapazität (C₄) verbundenen Strecke (Tᵥ) in dem Schwingkreis erfolgt.

8. Betriebsschaltung nach einem der vorstehenden Ansprüche, bei der die Vorheizzeit durch einen Ladevorgang einer Vorheizzeitkapazität (Cᵥ) erfolgt.

9. Betriebsschaltung nach Anspruch 8, bei der der Vorheizzeitkapazität (Cᵥ) ein Entladewiderstand (Rᵥ₃) parallelgeschaltet ist, um ein Vorheizen der Elektroden auch nach kurzen Betriebsunterbrechungen zu ermöglichen.

10. Betriebsschaltung nach Anspruch 8 oder 9, bei der eine Zenerdiode (D_{V2}) zur Definition eines elektrischen Schwellenwerts für den Ladevorgang der Vorheizzeitkapazität (Cᵥ) verwendet wird.

11. Betriebsschaltung nach Anspruch 8, 9 oder 10, bei der durch die Aufladung der Vorheizzeitkapazität (Cᵥ) die Umschaltung einer Transistorstrecke (Tᵥ) erfolgt und zwischen die vorheizzeitkapazitätsseitigen Anschlüsse des Transistors (Tᵥ) ein Widerstand (R_{V2}) zur Verringerung des Einflusses von Schwankungen der elektrischen Daten des Transistors (Tᵥ) geschaltet ist.

12. Betriebsschaltung nach einem der vorstehenden Ansprüche, zumindest Anspruch 7, bei der der mit der Kapazität (C₄) verbundenen Strecke (T_{V}) eine Kapazität (C_{4b}) parallelgeschaltet ist, um eine ausreichende Oszillation der Oszillatorschaltung (T₁, T₂, C₅ - C₇, L₃-A, La) zur Erzeugung einer Ausgangsleistung für einen ausreichenden Vorheizstrom zu ermöglichen.

13. Elektrisches Vorschaltgerät für eine Stableuchtstofflampe mit einer Betriebsschaltung nach einem der Ansprüche 1 bis 12.

14. Elektrisches Vorschaltgerät für eine Kompaktleuchtstofflampe mit einer Betriebsschaltung nach einem der Ansprüche 1 bis 12.

15. Kompaktleuchtstofflampe mit einem elektrischen Vorschaltgerät nach Anspruch 13 oder 14.

## Claims

1. Operating circuit for a discharge lamp (La) with preheatable electrodes, which operating circuit has an oscillator circuit (T₁, T₂, C₅ - C₇, L₃-A, La) with at least one switching transistor for generating an output power at an RF frequency for the discharge lamp (La), to be connected to the oscillator circuit (T₁, T₂, C₅-C₇, L₃-A, La), by means of a switching operation corresponding to the RF frequency, the operating circuit being designed such that after the operating circuit has been started the RF frequency of the oscillator circuit (T₁, T₂, C₅ - C₇, L₃-A, La) is varied such that the discharge lamp (La) does not initially ignite, but a preheating current for preheating the electrodes flows through the electrodes, and, after a preheating time, the RF frequency being returned to an operating frequency in the vicinity of a resonant frequency of the oscillator circuit (T₁, T₂, C₅ - C₇, L₃-A, La) in order to ignite the discharge lamp, **characterized in that** the RF frequency of the oscillator circuit (T₁, T₂, C₅ - C₇, L₃-A, La) is determined by at least one dedicated resonant circuit (L₂, C₄, C_{4b}, VS) which is connected to a control electrode of the switching transistor (T, T₂), in order to apply control signals at the RF frequency determined by the resonant circuit (L₂, C₄, C_{4b}, VS) to the control electrode, the variation in the RF frequency for preheating purposes being performed by a detuning of the natural frequency of the resonant circuit (L₂, C₄, C_{4b}, VS) with reference to the resonant frequency of the oscillator circuit (T₁, T₂, C₅ - C₇, L₃-A, La).

2. Operating circuit according to Claim 1, in which the oscillator circuit (T₁, T₂, C₅ - C₇, L₃-A, La) is a half-bridge circuit with two switching transistors (T₁, T₂).

3. Operating circuit according to Claim 2, in which the half-bridge circuit has complementary switching transistors (T₁, T₂).

4. Operating circuit according to one of the preceding claims, in which the oscillator circuit (T₁, T₂, C₅ - C₇, L₃-A, La) has MOSFETs as switching transistors (T₁, T₂).

5. Operating circuit according to one of the preceding claims, in which the oscillator circuit (T₁, T₂, C₅ - C₇, L₃-A, La) is a bridge circuit, and the resonant circuit (L₂, C₄, C_{4b}, VS) is situated between the control electrode and a bridge midpoint.

6. Operating circuit according to one of the preceding claims, in which the resonant circuit is an LC resonant circuit.

7. Operating circuit according to one of the preceding claims, in which detuning of the natural frequency of the resonant circuit is performed by switching a junction (Tᵥ) connected to a capacitance (C₄) in the resonant circuit.

8. Operating circuit according to one of the preceding claims, in which the preheating time is determined by a charging operation of a preheating capacitance (C_{V}).

9. Operating circuit according to Claim 8, in which the preheating capacitance (C_{V}) is connected in parallel with a discharging resistor (R_{V3}), in order to permit preheating of the electrodes even after short operational interruptions.

10. Operating circuit according to Claim 8 or 9, in which a zener diode (D_{V2}) is used to define an electric threshold value for the charging operation of the preheating capacitance (C_{V}).

11. Operating circuit according to claim 8, 9 or 10, in which a transistor junction (T_{V}) is switched over by charging the preheating capacitance (C_{V}), and a resistor (R_{V2}) is connected between the terminals of the transistor (T_{V}) on the side of the preheating capacitance in order to reduce the influence of fluctuations in the electrical data of the transistor (T_{V}).

12. Operating circuit according to one of the preceding claims, at least Claim 7, in which a capacitance (C_{4b}) is connected in parallel, with the junction (Tᵥ) connected to the capacitance (C₄), in order to permit adequate oscillation of the oscillator circuit (T₁, T₂, C₅ - C₇, L₃-A, La) so as to generate an output power for an adequate preheating current.

13. Electric ballast for a tubular fluorescent lamp with an operating circuit according to one of Claims 1 to 12.

14. Electric ballast for a compact fluorescent lamp with an operating circuit according to one of Claims 1 to 12.

15. Compact fluorescent lamp with an electric ballast according to Claim 13 or 14.

## Revendications

1. Circuit de commande pour une lampe à décharge (La) avec électrodes pouvant être préchauffées,
lequel circuit de commande comporte un circuit oscillateur (T₁, T₂, C₅ - C₇, L₃ - A, La) avec au moins un transistor de commutation pour la production d'une puissance de sortie ayant une fréquence HF pour la lampe à décharge (La) à raccorder au circuit oscillateur (T₁, T₂, C₅ - C₇, L₃ - A, La) par une commande de commutation correspondant à la fréquence HF,
le circuit de commande étant conçu de telle sorte que, après un démarrage du circuit de commande, la fréquence HF du circuit oscillateur (T₁, T₂, C₅ - C₇, L₃ - A, La) est modifiée de telle sorte que la lampe à décharge (La) ne s'allume pas tout de suite mais qu'un courant de préchauffage destiné au préchauffage des électrodes passe par les électrodes,
et la fréquence HF étant ramenée après un temps de préchauffage à une fréquence de commande proche d'une fréquence de résonance du circuit oscillateur (T₁, T₂, C₅ - C₇, L₃ - A, La) pour allumer la lampe à décharge,
**caractérisé par le fait que**
la fréquence HF du circuit oscillateur (T₁, T₂, C₅ - C₇, L₃ - A, La) est déterminée par au moins un circuit oscillant propre (L₂, C₄, C_{4b}, VS) qui est raccordé à une électrode de commande du transistor de commutation (T, T₂) pour alimenter l'électrode de commande avec des signaux de commande ayant la fréquence HF déterminée par le circuit oscillant (L₂, C₄, C_{4b}, VS),
la modification de la fréquence HF pour le préchauffage s'effectuant au moyen d'un désaccord de la fréquence propre du circuit oscillant (L₂, C₄, C_{4b}, VS) par rapport à la fréquence de résonance du circuit oscillateur (T₁, T₂, C₅ - C₇, L₃ - A, La).

2. Circuit de commande selon la revendication 1, dans lequel le circuit oscillateur (T₁, T₂, C₅ - C₇, L₃ - A, La) est en circuit en demi - pont avec deux transistors de commutation (T₁, T₂).

3. Circuit de commande selon la revendication 2, dans lequel le circuit en demi-pont comporte des transistors de commutation complémentaires (T₁, T₂).

4. Circuit de commande selon l'une des revendications précédentes, dans lequel le circuit oscillateur (T₁, T₂, C₅ - C₇, L₃ - A, La) comporte des MOS-FET comme transistors de commutation (T₁, T₂).

5. Circuit de commande selon l'une des revendications précédentes, dans lequel le circuit oscillateur (T₁, T₂, C₅ - C₇, L₃ - A, La) est un circuit en pont et le circuit oscillant (L₂, C₄, C_{4b}, VS) se trouve entre l'électrode de commande et un centre de pont.

6. Circuit de commande selon l'une des revendications précédentes, dans lequel le circuit oscillant est un circuit oscillant LC.

7. Circuit de commande selon l'une des revendications précédentes, dans lequel le désaccord de la fréquence propre du circuit oscillant s'effectue au moyen d'un branchement d'une section (T_{V}), reliée à une capacité (C₄), dans le circuit oscillant.

8. Circuit de commande selon l'une des revendications précédentes, dans lequel le temps de préchauffage s'effectue au moyen d'une opération de charge d'une capacité de temps de préchauffage (C_{V}).

9. Circuit de commande selon la revendication 8, dans lequel une résistance de décharge (R_{V3}) est branchée en parallèle avec la capacité de temps de préchauffage (C_{V}) pour permettre un préchauffage des électrodes même après de brèves interruptions de commande.

10. Circuit de commande selon la revendication 8 ou 9, dans lequel une diode Zener (D_{V2}) est utilisée pour la définition d'une valeur de seuil électrique pour l'opération de charge de la capacité de temps de préchauffage (C_{V}).

11. Circuit de commande selon la revendication 8, 9 ou 10, dans lequel la commutation d'une section de transistor (T_{V}) s'effectue au moyen de la charge de la capacité de temps de préchauffage (C_{V}) et une résistance (R_{V2}) est branchée entre les bornes, situées du côté de la capacité de temps de préchauffage, du transistor (T_{V}) pour réduire l'influence de variations des données électriques du transistor (T_{V}).

12. Circuit de commande selon l'une des revendications précédentes, au moins la revendication 7, dans lequel une capacité (C_{4b}) est branchée en parallèle avec la section (T_{V}) reliée à la capacité (C₄) pour permettre une oscillation suffisante du circuit oscillateur (T₁, T₂, C₅ - C₇, L₃-A, La) pour la production d'une puissance de sortie pour un courant de préchauffage suffisant.

13. Ballast électrique pour une lampe torche à tube fluorescent avec un circuit de commande selon l'une des revendications 1 à 12.

14. Ballast électrique pour une lampe compacte à tube fluorescent avec un circuit de commande selon l'une des revendications 1 à 12.

15. Lampe compacte à tube fluorescent avec un ballast électrique selon la revendication 13 ou 14.
